# EUROPÄISCHE PATENTSCHRIFT

(11) **EP 3 187 836 B1**
(45) Veröffentlichungstag und Bekanntmachung des Hinweises auf die Patenterteilung: **11.05.2022**
(21) Anmeldenummer: 16201596.0
(22) Anmeldetag: 01.12.2016
(51) Int. Cl.: G01F 23/00, G01F 23/28, G01S 7/03

(54) **SIGNALLAUFZEIT-FÜLLSTANDSENSOR MIT LANGZEIT-ENERGIESPEICHER**
TIME DOMAIN REFLECTOMETRY TYPE FLUID LEVEL SENSOR WITH LONG TERM ENERGY STORAGE DEVICE
CAPTEUR DE NIVEAU DE FLUIDE DU TYPE DE DURÉE DE PROPAGATION COMPRENANT UN ACCUMULATEUR D'ÉNERGIE À STOCKAGE DE LONGUE DURÉE

(30) Priorität: 15.12.2015 DE 102015225303
(43) Veröffentlichungstag der Anmeldung: 05.07.2017
(73) Patentinhaber: VEGA Grieshaber KG, 77709 Wolfach (DE)
(72) Erfinder: FEHRENBACH, Josef, 77716 Haslach (DE); GRIEßBAUM, Karl, 77796 Mühlenbach (DE)
(74) Vertreter: Maiwald Patent- und Rechtsanwaltsgesellschaft mbH

(56) Entgegenhaltungen:
- DE-A1- 2 840 848
- US-A- 4 400 976
- US-A- 6 014 100
- US-A1- 2004 124 854

## Beschreibung

### Gebiet der Erfindung

Die Erfindung betrifft ein Füllstandmessgerät mit einem Langzeit-Energiespeicher und insbesondere betrifft die Erfindung ein Füllstandmessgerät in Form eines Laufzeitsensors nach Radar-, TDR- oder Ultraschallprinzip.

### Technischer Hintergrund

Füllstandmessgeräte und insbesondere Laufzeitsensoren zur Füllstandmessung, die nach dem Radar-, TDR- (Time Domain Reflectometry) oder Ultraschallprinzip arbeiten, weisen im Regelfall einen stark schwankenden Energieverbrauch auf, der durch die Abwechslung von energieintensiven Messphasen mit Auswertephasen oder Pausenzeiten mit deutlich geringerem Energiebedarf hervorgerufen wird.

Ist ein solches Füllstandmessgerät an eine Zweileiterschleife angeschlossen, ist die Energieaufnahme bedingt durch den Zweileiterbetrieb (4-20mA oder Konstantstrom mit überlagerter digitaler Kommunikation) zumindest temporär konstant und die sich ergebende aktuell verfügbare elektrische Leistung kann geringer sein als eine aktuelle, in der Messphase benötigte Leistung.

Daraus ergibt sich die Notwendigkeit eines Pufferspeichers zur Energiespeicherung zur Überbrückung eines temporären Leistungsdefizits.

Es sind auch Laufzeitsensoren bekannt, die zur Langzeitenergieversorgung einen Akkumulator aufweisen, der jedoch nicht über eine Zweidrahtschleife geladen wird. Dieser Akkumulator muss zu gegebenem Zeitpunkt gesondert aufgeladen werden. Das Dokument DE 28 40 848 Aloffenbart ein Überwachungssystem für einen Pegelstand einer leitfähigen Flüssigkeit. Das Überwachungssystem weist einen Fühler auf, welcher drei elektrisch voneinander getrennte, aber leitende Bereiche aufweist. Eine nachgeschaltene Schaltung wird nur aktiviert, wenn sich die Flüssigkeit zwischen einem ersten und einem zweiten Bereich befindet.

Das Dokument US 6 014 100 A betrifft einen Radarsensor zur Füllstandmessung. Dieser Radarsensor benötigt nur eine geringe Strommenge, welche durch eine Zweileiterschleife bereitgestellt wird.

Dokument US 4 400 976 A betrifft einen verbesserten Transmitter für Ultraschall-Entfernungsmesssysteme. Der Transmitter umfasst hierbei einen Kondensator zum Speichern von Leistung.

Das Dokument US 2004/124854 A1 betrifft ein Füllstandmesssystem, welches von einer Zweileiterschleife mit Energie versorgt wird. Das Füllstandmesssystem weist unter anderem einen Speicherkondensator auf, welcher durch die Zweileiterschleife geladen wird. Der Speicherkondensator kann die in ihm gespeicherte Energie an einen Transmitter abgeben, um diesen zu betreiben.

### Zusammenfassung der Erfindung

Es ist eine Aufgabe der Erfindung, ein Füllstandmessgerät mit einem Langzeit-Energiespeicher anzugeben, der das Füllstandmessgerät zuverlässig über einen langen Zeitraum mit Energie versorgt.

Die Erfindung betrifft ein Füllstandmessgerät nach Anspruch 1 sowie ein Verfahren zum Betreiben eines Füllstandmessgeräts nach Anspruch 11.

Die Erfindung betrifft ein Füllstandmessgerät, welches einen Anschluss für eine externe Energieversorgung aufweist, über welchen das Füllstandmessgerät an die externe Energieversorgung angeschlossen werden kann. Es ist eine Sensorelektronik vorgesehen, die zum Erfassen eines elektrischen Sensorsignals ausgeführt ist, aus dem sich ein Füllstand ableiten lässt. Bei dem Sensorsignal kann es sich beispielsweise um eine Echokurve handeln.

Darüber hinaus weist das Füllstandmessgerät einen Langzeit-Energiespeicher auf, der über die externe Energieversorgung aufladbar ist und ausgeführt ist, als Energiequelle zum Laden eines Pufferkondensators oder zum direkten Ausgleich eines schwankenden Energieverbrauchs des Füllstandmessgeräts zu dienen. Im erstgenannten Fall dient der Pufferkondensator zum Ausgleich des schwankenden Energieverbrauchs des Füllstandmessgeräts; dieser kann aber von dem Langzeit-Energiespeicher aufgeladen werden.

Weiterhin ist ein erstes Bauteil vorgesehen, das mit dem Langzeit-Energiespeicher verbunden ist zum Verhindern eines Stromflusses vom Langzeit-Energiespeicher in Richtung des Anschlusses. Darüber hinaus ist ein zweites Bauteil vorgesehen, das mit dem Langzeit-Energiespeicher verbunden ist zum Verhindern eines Stromflusses vom Langzeit-Energiespeicher in Richtung der Sensorelektronik, wenn das Füllstandmessgerät nicht von der externen Energieversorgung mit Energie versorgt wird.

Bei dem ersten Bauteil handelt es sich beispielsweise um eine Diode oder eine Schalteinheit. Bei dem zweiten Bauteil handelt es sich beispielsweise um eine Schalteinheit, die die Verbindung zwischen dem Langzeit-Energiespeicher und der Sensorelektronik unterbricht, wenn das Füllstandmessgerät nicht von der externen Energieversorgung mit Energie versorgt wird bzw. abgeschaltet wird bzw. abgeschaltet ist.

Setzt die Energieversorgung wieder ein bzw. wird das Füllstandmessgerät wieder angeschaltet, wird die Schalteinheit geschaltet, sodass nun der Stromfluss zwischen Langzeit-Energiespeicher und Sensorelektronik wieder möglich ist.

Auf entsprechende Weise kann auch die erste Schalteinheit arbeiten.

Bei dem Langzeit-Energiespeicher kann es sich beispielsweise um einen sog. Supercap oder einen EDLC (Electric Double-Layer Capacitor) handeln, oder aber auch um einen Akkumulator.

Gemäß einer weiteren Ausführungsform der Erfindung handelt es sich bei der externen Energieversorgung um eine 4-20mA Zweileiterschleife, über welche das Füllstandmessgerät mit Energie für den Messbetrieb versorgbar ist und über welche der Messwert an eine externe Einrichtung kommunizierbar ist.

Gemäß einer weiteren Ausführungsform der Erfindung ist der Langzeit-Energiespeicher außerdem zur Energieversorgung eines Elements oder Bauteils des Füllstandmessgeräts ausgeführt, wenn das Füllstandmessgerät ausgeschaltet ist. Bei diesem Element oder Bauteil handelt es sich beispielsweise um eine Echtzeituhr RTC (real time clock), oder um einen digitalen Speicher, um dessen Datenerhalt zu gewährleisten.

Gemäß einer weiteren Ausführungsform der Erfindung weist das Füllstandmessgerät eine Batterie und eine Schalteinheit auf, welche die Batterie (kann auch ein Akkumulator sein) mit dem Langzeit-Energiespeicher verbindet. Die Batterie und die Schalteinheit sind ausgeführt, den Langzeit-Energiespeicher nur dann mit Energie zu versorgen, wenn das Füllstandmessgerät ausgeschaltet ist. In anderen Worten unterbricht die Schalteinheit die Verbindung zwischen Batterie und Langzeit-Energiespeicher, wenn das Füllstandmessgerät angeschaltet ist und stellt die Verbindung her, wenn das Füllstandmessgerät ausgeschaltet ist.

Gemäß einer weiteren Ausführungsform der Erfindung weist das Füllstandmessgerät einen Pufferkondensator zum Ausgleich des schwankenden Energieverbrauchs des Füllstandmessgeräts auf, sowie eine Schalteinheit, welche den Langzeit-Energiespeicher mit dem Pufferkondensator verbindet und derart ausgeführt ist, dass der Langzeit-Energiespeicher den Pufferkondensator erst dann lädt, wenn das Füllstandmessgerät eingeschaltet wurde.

Gemäß einer weiteren Ausführungsform der Erfindung weist das Füllstandmessgerät ebenfalls einen ersten Pufferkondensator zum Ausgleich des schwankenden Energieverbrauchs des Füllstandmessgeräts auf, sowie einen zweiten Pufferkondensator, der in Reihe zu der Parallelschaltung eines Widerstands mit einer Schalteinheit geschaltet ist. Die genannte Reihenschaltung wiederum ist parallel zu dem ersten Pufferkondensator geschaltet. Ist die Schalteinheit hochohmig geschaltet, erfolgt der Ladevorgang des zweiten Pufferkondensators durch die Wirkung des Widerstands im Vergleich zum Ladevorgang des ersten Pufferkondensators langsamer, ist also verzögert. Ist die Schalteinheit dagegen niederohmig geschaltet, wirken beide Kondensatoren als parallelgeschaltete Kondensatoren zusammen.

Gemäß einer weiteren Ausführungsform der Erfindung ist eine Strombegrenzungsschaltung vorgesehen, die ausgeführt ist, dem Langzeit-Energiespeicher nur die Energie aus der externen Energieversorgung bereitzustellen, die nicht für die Kommunikationsschaltung und die Messelektronik des Füllstandmessgeräts benötigt wird.

Erfindungsgemäß können die folgenden Probleme vermieden werden:
- Lange Startzeiten des Sensors wegen der Ladung von Energiespeichern;
- Energieverlust beim Ausschalten durch die Entladung von Energiespeichern, was bei Intervallbetrieb, bei dem aus Energiegründen nur in großen zeitlichen Abständen Messwerte generiert werden, besonders störend sein kann;
- Platz-/Kostenbedarf durch große temporäre Energiespeicher;
- Probleme bei niedrigen Versorgungsspannungen durch begrenzte Kapazität der Energiespeicher.

Vorteile des Füllstandmessgeräts sind insbesondere darin zu sehen:
- Schnelle Startzeiten, da eine langsame Ladung von Energiespeichern beim Anschalten des Füllstandmessgeräts durch Nutzung der Energie des Langzeit-Energiespeichers entfallen kann oder deutlich verkürzt wird;
- reduzierter Energieabfluss nach dem Ausschalten;
- bessere "Glättung" des Energieverbrauchs durch größere Gesamtkapazität des/der Energiespeicher und damit bessere Eignung für die Versorgung des Füllstandmessgeräts mit geringerer Versorgungsspannung;
- verbesserte Anpassung an einen Intervallbetrieb des Füllstandmessgeräts, bei dem aus Energiegründen nur in großen zeitlichen Abständen Messwerte generiert werden (beispielsweise autark versorgtes Feldgerät mit Funkanbindung);
- Langzeit-Energiespeicher lässt sich gleichzeitig mitnutzen als Backup-Energiequelle für Schaltungsteile, deren Funktionen in gewissem Maße auch ohne Versorgungsspannung aufrechtzuerhalten sind (beispielsweise Echtzeituhr, digitaler Speicher für Ereignisspeicherung, Parameterspeicherung oder die Speicherung von ausführbarem Softwarecode).

Im Folgenden werden mit Verweis auf die Figuren Ausführungsbeispiele der Erfindung beschrieben.

### Kurze Beschreibung der Figuren

Fig. 1 zeigt ein Blockschaltbild eines Füllstandmessgeräts.
Fig. 2 zeigt ein Blockschaltbild eines Füllstandmessgeräts gemäß einem ersten Ausführungsbeispiel der Erfindung.
Fig. 3 zeigt ein Blockschaltbild eines Füllstandmessgeräts gemäß einem weiteren Ausführungsbeispiel der Erfindung.
Fig. 4 zeigt ein Blockschaltbild eines Füllstandmessgeräts gemäß einem weiteren Ausführungsbeispiel der Erfindung.
Fig. 5 zeigt ein Blockschaltbild eines Füllstandmessgeräts gemäß einem weiteren Ausführungsbeispiel der Erfindung.
Fig. 6 zeigt ein Blockschaltbild eines Füllstandmessgeräts gemäß einem weiteren Ausführungsbeispiel der Erfindung.
Fig. 7 zeigt ein Blockschaltbild eines Füllstandmessgeräts gemäß einem weiteren Ausführungsbeispiel der Erfindung.
Fig. 8 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

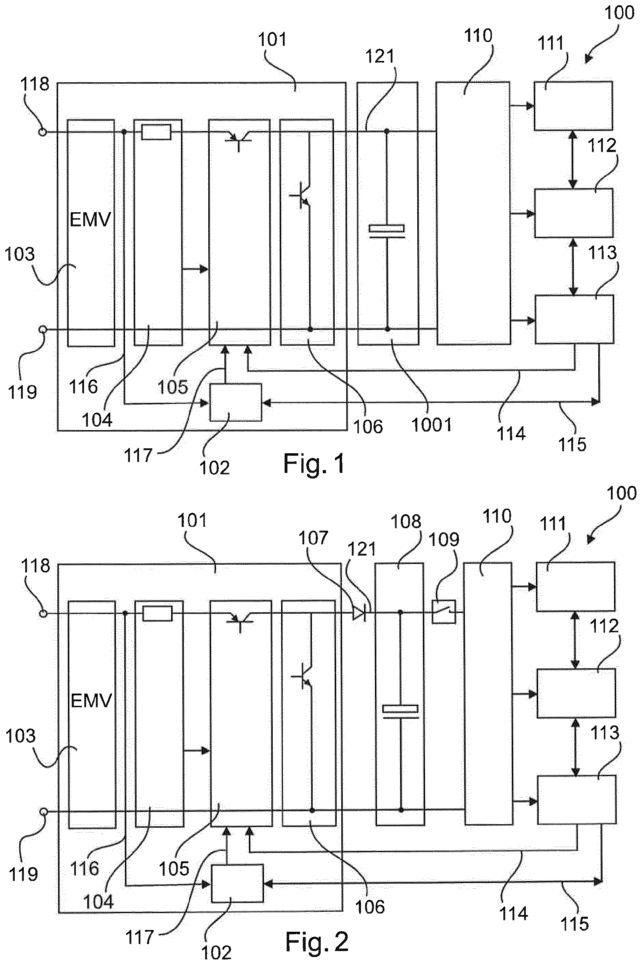

Fig. 1 zeigt ein Blockschaltbild eines Füllstandmessgeräts 100 mit Anschlüssen 118, 119 zum Anschluss an eine Zweidrahtleitung (Stromschleife). Über die Zweidrahtleitung wird das Messgerät 100 sowohl mit der nötigen Energie zum Betrieb des Gerätes versorgt als auch der Messwert der Füllstandmessung zu einer hier nicht dargestellten, ebenfalls an der Zweidrahtleitung angeschlossenen Gegenstelle übertragen, Das Füllstandmessgerät weist eine sog. Sensor-Loop-Schnittstelle 101 auf, die eine EMV-Eingangsschaltung 103 zur Strombegrenzung, Spannungsbegrenzung, EMV-Filterung und ggf. zum Ex-Schutz umfasst. Darüber hinaus weist sie einen Regler 105 für den in der Zweidrahtleitung fließenden Schleifenstrom mit einer Schleifenstrom-Istwerterfassung 104 und einer Schleifenstrom-Sollwert-Vorgabe 114, sowie einen Parallelstromzweig (Shunt) 106 auf.

Die Schleifenstrom-Istwerterfassung (Current Sense) 104 dient der Fühlung des Strom-Istwerts als Eingangsgröße für den Stromregler (Current Regulator) 105.

Der Stromregler 105 dient der Regelung des Schleifenstroms auf den gewünschten Ausgangsstrom, der im dargestellten Ausführungsbeispiel den Messwert in der Stromschleife repräsentiert. Er vergleicht den Strom-Istwert mit dem Strom-Sollwert 114, der von der Kommunikationsschaltung 113 bereitgestellt wird. Diese Form der analogen Messwertübertragung über die Zweidrahtleitung ist beispielsweise als sogenannte 4-20mA-Zweidrahtschleife bekannt und weit verbreitet.

Es sei daraufhingewiesen, dass es auch möglich ist, den Messwert über eine Zweidrahtleitung digital zu übertragen. In diesem Fall wird beispielsweise der Schleifenstrom durch den Stromregler 105 im Mittel konstant gehalten. Der Messwert lässt sich digitalisiert übertragen durch eine Modulation des Stroms mit einem entsprechenden Wechselspannungssignal.

Der Shunt 106 leitet den Anteil des Gesamtstroms (Schleifenstroms) ab, der von der nachfolgenden Schaltung des Sensors nicht aufgenommen wird. Er ist ausgeführt als Spannungsbegrenzung oder Spannungsregelung (z. B. Regelung eines vorgegebenen Spannungsabfalls über den Längstransistor des Stromreglers 105).

Soll über die Zweidrahtleitung zusätzlich zu der analogen Messwertübertragung oder aber an Stelle der analogen Messwertübertragung eine digitale Kommunikation zwischen Füllstandmessgerät 100 und einer nicht dargestellten Gegenstelle stattfinden, kann dies beispielsweise über die standardisierte HART-Kommunikation erfolgen. Hierzu enthält das Füllstandmessgerät 100 ein HART-Modem 102. Das HART-Modem 102 empfängt über die Zweidrahtleitung das HART-Anfragesignal vom Master (nicht dargestellte Kommunikations-Gegenstelle) und moduliert das HART-Antwortsignal über den Stromregler 105 auf den Schleifenstrom. Es bekommt bzw. leitet HART-Daten weiter von/zu der Kommunikationsschaltung 113.

Der Energiespeicher oder Pufferspeicher 1001 dient der Energiepufferung zum Ausgleich von Energiespitzen. Er entlädt sich nach der Trennung des Sensors von der Stromschleife und muss nach dessen Einschalten (in anderen Worten der Verbindung des Sensors mit der Stromschleife) erst langsam geladen werden. Die Größe des Energiespeichers richtet sich nach dem Verhältnis von der Durchschnittsenergieaufnahme zur maximalen Energieaufnahme des Sensors und nach dem Abstand von zulässiger maximaler und minimaler Spannung am Pufferkondensator.

Die Leistungsversorgung (Power Supply) 110 kann als Netzteilschaltung zur Versorgung aller Funktionseinheiten (Schaltungsteile) ausgeführt sein und enthält beispielsweise Schaltregler (Step-Down-Regulator, Step-Up-Regulator), Spannungsregler und Glättungskondensatoren zur Bereitstellung stabilisierter Ausgangsspannungen.

Die Sensorelektronik 111 ist ein Schaltungsteil zur Erzeugung eines elektrischen Sensorsignals, das mit dem Messwert zusammenhängt bzw. aus welchem der Messwert berechnet oder abgeleitet werden kann. Es dient der Wandlung einer physikalischen Messgröße (beispielsweise die Laufzeit des Messsignals vom Sensor zur Füllgutoberfläche und zurück) in ein elektrisches Signal (z. B. Echokurve) und enthält beispielsweise Hochfrequenz-Schaltungsteile (Sender, Empfänger, Koppler, Antenne, Mischer, Verstärker).

Die Messelektronik 112 ist ein Schaltungsteil zur Auswertung des elektrischen Sensorsignals und zur Berechnung bzw. Ableitung eines entsprechenden Messwertes aus dem elektrischen Sensorsignal (beispielsweise in Form einer Echokurvenauswertung, Störechobehandlung, Ermittlung des Ausgabewerts, ...). Sie steuert die zyklisch wiederholte Messung und organisiert das Energie-Management des gesamten Messgeräts.

Die Kommunikationsschaltung 113 organisiert alle Kommunikationen des Sensors mit der Außenwelt, übermittelt den Ausgabewert (Stromwert) an den Stromregler, organisiert die HART-Kommunikation, organisiert Kommunikation mit optionaler Anzeige-Bedieneinheit (nicht dargestellt) und enthält optional Schaltungsteile für eine drahtlose Kommunikation.

Das Füllstandmessgerät 100 ist über die Anschlüsse 118, 119 an eine externe Energieversorgung anschließbar. Im gezeigten Ausführungsbeispiel handelt es sich bei der externen Energieversorgung um eine Zweidrahtleitung (4-20mA).

Der Energiespeicher 1001 ist zwischen der Sensor-Loop-Schnittstelle 101 und der Leistungsversorgung 110 angeordnet. Die Leistungsversorgung 110 versorgt die Sensorelektronik 111, die Messelektronik 112 und die Kommunikationsschaltung 113 mit elektrischer Energie und wird selber von der Zweileiterschleife gespeist. Der Energiespeicher 1001 wird ebenfalls von der Zweileiterschleife gespeist und sorgt für einen direkten Ausgleich eines schwankenden Energieverbrauchs des Füllstandmessgeräts 100.

Die Kommunikationsschaltung 113 liefert über die Leitung 114 einen Sollwert für den Ausgabestrom an den Stromregler 105. Das HART-Modem 102 steht über die Leitung 115 im Austausch mit der Kommunikationsschaltung 113 und über die Leitung 117 kann es Signale an den Stromregler 105 abgeben.

Vom Anschluss 118 führt eine Versorgungsleitung 121 zur Leistungsversorgungsschaltung 110. An diese Versorgungsleitung sind die Einheiten 103, 104, 105, 106 und der Energiespeicher 1001 angeschlossen bzw. in diese eingeschleift.

Fig. 2 zeigt ein Blockschaltbild eines Füllstandmessgeräts 100 gemäß einem Ausführungsbeispiel der Erfindung. Der Energiespeicher 1001 der Schaltung der Fig. 1 ist durch einen Langzeit-Energiespeicher 108 ersetzt. Darüber hinaus sind zusätzliche Maßnahmen vorgesehen, die der Erhaltung der Speicherenergie bei Trennung des Füllstandmessgeräts von der Stromschleife (sog. Ausschaltzustand) dienen. Hierbei handelt es sich um ein erstes Bauteil 107, welches als Diode ausgeführt ist. Alternativ kann dieses Bauteil auch als Schalteinheit ausgeführt sein. Dieses erste Bauteil 107 verhindert die Entladung des Langzeit-Energiespeichers 108 zur Zweidrahtschleife hin (also in Richtung der Anschlüsse 118, 119). Die Diode 107 befindet sich somit zwischen dem Langzeit-Energiespeicher 108 und einem der Anschlüsse 118, 119.

Darüber hinaus ist ein zweites Bauteil 109 vorgesehen, welches beispielsweise in Form einer Schalteinheit ausgeführt ist und sich zwischen dem Langzeit-Energiespeicher 108 und der Leistungsversorgung 110 befindet. Diese Schalteinheit wird hochohmig im ausgeschalteten Zustand des Füllstandmessgeräts (wenn also das Füllstandmessgerät von der Stromschleife getrennt ist) und verhindert eine Entladung des Langzeit-Energiespeichers durch die Sensorschaltung mit den Komponenten Sensorelektronik 111, Messelektronik 112 und Kommunikationsschaltung 113. Bei der Schalteinheit kann es sich beispielsweise um einen Feldeffekttransistor als Längsschalter handeln.

Günstige Langzeit-Energiespeicher sind meist nur für geringe Spannungen (beispielsweise 3 bis 5 V) geeignet. Falls durch längere Ausschaltzeit der Energiespeicher doch entladen wird, dauert es beim Wiedereinschalten entsprechend lange, bis er wieder geladen ist. Dieser Vorgang kann zu einer verlängerten Startzeit des Füllstandmessgeräts führen.

Ein Langzeit-Energiespeicher 108 ist im Kontext der vorliegenden Erfindung ein Energiespeicher, der vorzugsweise seine Energie unabhängig vom Zustand der leitungsgeführten Versorgung des Füllstandmessgeräts speichern (halten) kann. Unabhängig von der externen Energieversorgung des Sensors über die Zweidrahtleitung bleibt die Ladung im Langzeit-Energiespeicher weitgehend erhalten. Hierfür sorgen die Bauteile 107, 109, welche einen Energieabfluss in Richtung Füllstandmessgeräteanschluss und Sensorschaltung verhindern.

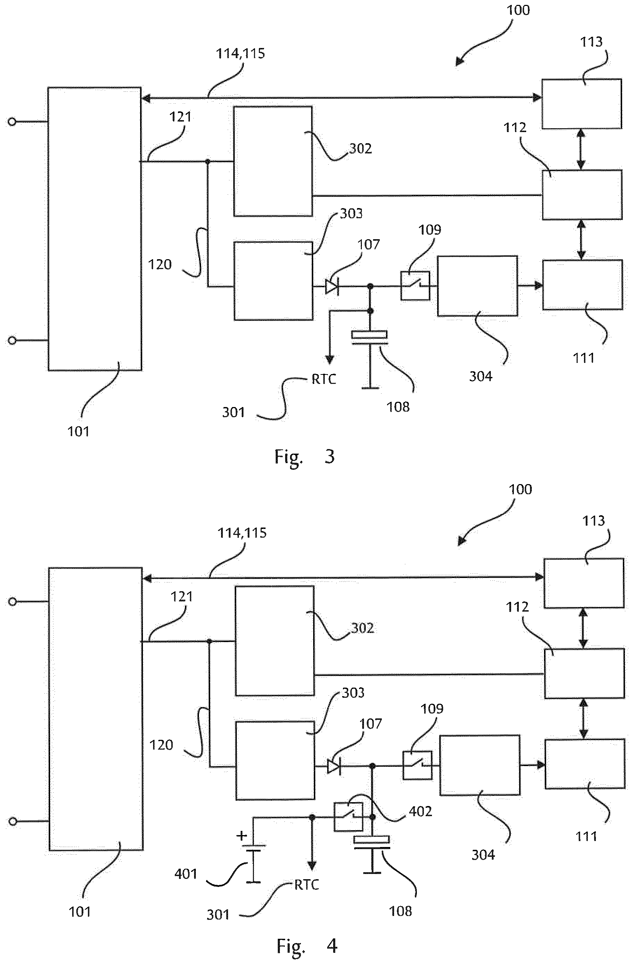

Fig. 3 zeigt ein Blockschaltbild gemäß einem weiteren Ausführungsbeispiel der Erfindung.

Im Unterschied zum Ausführungsbeispiel der Fig. 2 dient der Langzeit-Energiespeicher 108 nicht als Energiepuffer für die gesamte Sensorschaltung 111, 112, 113 (im Falle der Fig. 2 sitzt er direkt vor der (einzigen) Leistungsversorgung 110 der Sensorschaltung), sondern nur zur Energiepufferung für die Sensorelektronik 111, da durch diese die Energiespitzen zumindest hauptsächlich verursacht sind. Wegen der üblicherweise geringen Spannungsfestigkeit von Langzeit-Energiespeicher-Kondensatoren wird die Spannung am Ausgang der Sensor-Loop-Schnittstelle 101 über einen Teil 303 der Leistungsversorgung auf eine geringere Spannung gewandelt (Step-Down-Regulator, Ausgangsspannung beispielsweise 4 V). Hinter diesem Teil der Leistungsversorgung befindet sich der Langzeit-Energiespeicher 108. Zwischen dem Langzeit-Energiespeicher 108 und dem Teil 303 der Leistungsversorgung befindet sich die Diode 107, welche einen Rückstromfluss in Richtung Sensor-Loop-Schnittstelle 101 verhindert. Hinter dem Langzeit-Energiespeicher befindet sich ein weiterer Teil 304 der Leistungsversorgung, welche die Sensorelektronik 111 speist. Dieser Teil 304 weist beispielsweise einen Step-Down-Wandler auf, der dafür sorgt, dass die Sensorelektronik 111 mit beispielsweise 3,3 V betrieben werden kann.

Zwischen dem Langzeit-Energiespeicher 108 und dem zweiten Teil 304 der Leistungsversorgung befindet sich das zweite Bauteil 109 in Form einer Schalteinheit, um einen Stromfluss vom Langzeit-Energiespeicher in Richtung Sensorelektronik 111 zu vermeiden, wenn das Feldgerät ausgeschaltet ist bzw. von der externen Energieversorgung getrennt ist.

Der dritte Teil 302 der Leistungsversorgung versorgt die Kommunikationsschaltung 113 und die Messelektronik 112, nicht jedoch die Sensorelektronik 111 (für deren Versorgung sind die hintereinander geschalteten Teile 303, 304 der Leistungsversorgung zuständig, zwischen denen sich der Langzeit-Energiespeicher 108 mit den beiden Bauteilen 107, 109 befindet).

Bestimmte Schaltungsteile, die so aufgebaut sind, dass sie auch mit sehr wenig Energie betrieben werden können, können über den Langzeit-Energiespeicher 108 auch im ausgeschalteten Zustand des Feldgeräts funktionsfähig gehalten werden. Hierbei handelt es sich beispielsweise um eine Echtzeituhr RTC 301. Auch kann in diesem Zustand der Langzeit-Energiespeicher den Datenerhalt von digitalen Speichern gewährleisten, indem er die digitalen Speicher mit der zu diesem Zweck extrem geringen Energie versorgt.

Fig. 4 zeigt ein Blockschaltbild gemäß einem weiteren Ausführungsbeispiel der Erfindung. Der Langzeit-Energiespeicher 108 wird hier im ausgeschalteten Zustand des Füllstandmessgeräts über eine zusätzliche Batterie oder einen zusätzlichen Akkumulator 401 versorgt, wodurch lange Ladezeiten eines Langzeit-Energiespeichers 108 beim Einschalten des Füllstandmessgeräts reduziert werden können oder gänzlich entfallen.

Es kann eine Schalteinheit 402 vorgesehen sein, die zwischen dem Langzeit-Energiespeicher 108 und der zusätzlichen Energieversorgung 401 sowie der Echtzeituhr 301 angeordnet ist und die Verbindungsleitung zwischen den beiden Bauteilen 401, 108 nur dann schließt, wenn das Füllstandmessgerät den ausgeschalteten Zustand erreicht hat oder gerade ausgeschaltet wird. Das Schaltungsteil 301 wird ebenso auch nur dann vom Langzeit-Energiespeicher 108 versorgt, wenn das Füllstandmessgerät ausgeschaltet wird bzw. ausgeschaltet ist.

Die Schalter 109 und 402 arbeiten also genau entgegengesetzt. Schaltet der eine Schalter auf Durchgang, öffnet sich der andere Schalter, und umgekehrt.

Die beiden Schalter 109, 402 könnten auch kombiniert werden (zu einem Schalter), der zwischen zwei Leitungspfaden hin- und herschaltet.

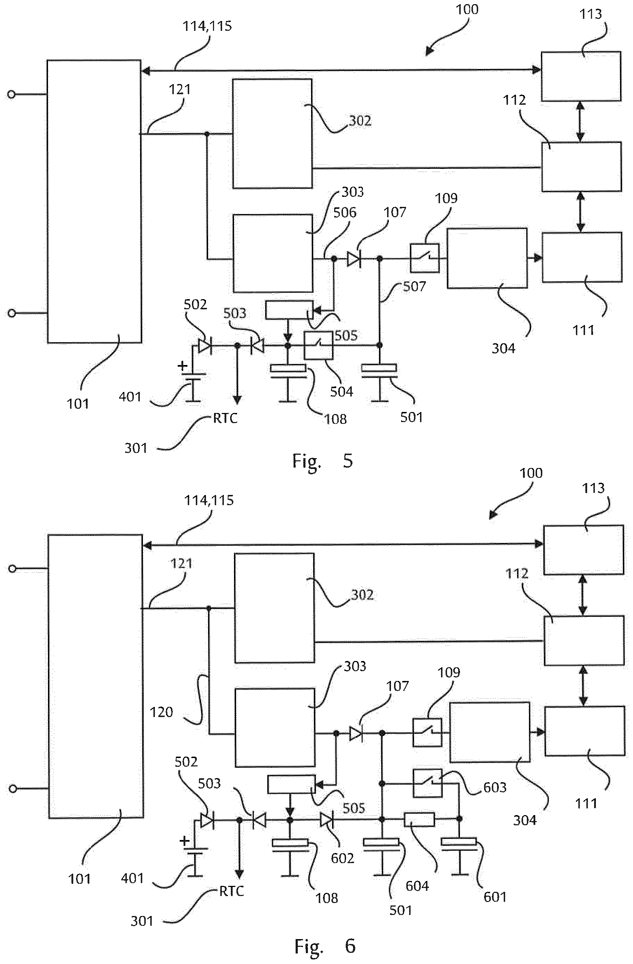

Fig. 5 zeigt ein Blockschaltbild eines Füllstandmessgeräts gemäß einem weiteren Ausführungsbeispiel der Erfindung. Im Unterschied zur Ausführung gemäß Fig. 4 puffert der Langzeit-Energiespeicher 108 die Energiespitzen, welche maßgeblich durch die Sensorelektronik 111 hervorgerufen werden, nicht direkt. Stattdessen ist ein "normaler" Speicherkondensator 501 als Pufferkondensator vorgesehen, um diese Energiespitzen direkt zu puffern. Der Langzeit-Energiespeicher 108 wird vorteilhaft benutzt, um den Pufferkondensator 501 nach dem Einschalten des Füllstandmessgeräts möglichst schnell aufzuladen. Dadurch entstehen sehr kurze Startzeiten für das Feldgerät bzw. sehr kurze Zeiten vom Einschalten bis zur Erfassung des ersten Messwerts.

In diesem wie auch in sämtlichen anderen Ausführungsbeispielen kann vorgesehen sein, dass der Langzeit-Energiespeicher im ausgeschalteten Zustand des Füllstandmessgeräts eine oder mehrere Schaltungsteile, wie die Echtzeituhr 301, mit Energie versorgt. Alternativ zur Schalteinheit 402 der Fig. 4 kann eine Diode vorgesehen sein, welche zwischen der Echtzeituhr 301 und dem Langzeit-Energiespeicher 108 angeordnet ist und einen Stromfluss vom Energiespeicher 401 zum Langzeit-Energiespeicher 108 verhindert. Zwischen der Echtzeituhr 301 und der Batterie 401 ist ebenfalls eine Diode 502 vorgesehen, welche entgegengesetzt zur oben genannten Diode 503 angeordnet ist und einen Stromfluss vom Langzeit-Energiespeicher 108 zur Batterie 401 verhindert. Allerdings kann durch diese Schaltung der Strom sowohl von der Batterie 401 als auch vom Langzeit-Energiespeicher 108 zur Echtzeituhr 301 fließen.

Hinter der ersten Leistungsversorgungseinheit 303 und vor der zweiten Leistungsversorgungseinheit 304 (für die Sensorelektronik 111) befindet sich der Langzeit-Energiespeicher 108 mit dem Pufferkondensator 501. Direkt hinter der ersten Leistungsversorgungseinheit 303 zweigt eine Ladeeinheit 505 ab, an welche der Langzeit-Energiespeicher 108 angeschlossen ist und welche für das Laden des Langzeit-Energiespeichers 108 mit Energie aus der Zweidrahtschleife zuständig ist. Diese Energie kann auch für die Echtzeituhr 301 verwendet werden.

Die Ladeeinheit 505 zweigt von der Verbindungsleitung 506 zwischen der ersten Leistungsversorgung 303 und der zweiten Leistungsversorgung 304 ab. Stromabwärts dieser Abzweigung befindet sich in der Verbindungsleitung 506 die Diode 107, gefolgt von einer zweiten Abzweigung 507, welche mit dem Pufferkondensator 501 und über die Schalteinheit 504 mit dem Langzeit-Energiespeicher 108 verbunden ist. Die Schalteinheit 504 wird während oder nach dem Einschalten des Füllstandmessgeräts geschlossen, sodass der Langzeit-Energiespeicher 108 den Pufferkondensator 501 aufladen kann. Zum selben Zeitpunkt oder danach wird auch die Schalteinheit 109 geschlossen, sodass die im Pufferkondensator gespeicherte Energie für die Sensorelektronik 111 verwendet werden kann.

In weiteren hier nicht dargestellten Ausführungsbeispielen zweigt die Ladeeinheit im Unterschied zu Fig. 5 von anderen geeigneten Punkten der Schaltung ab. Geeignet können grundsätzlich alle Punkte der Schaltung sein, die die Energie zur Speisung der Ladeschaltung aus der Zweileiterschleife bereitstellen können. Beispielsweise sind dies die Ausgänge der Leistungsversorgungen 302, 303, 304 oder deren Eingangsleitungen. In anderen Worten ist es für die Erfindung nur wesentlich, dass die Ladeeinheit 505 ihre Energie aus der Zweileiterschleife bezieht, nicht aber über welchen Weg dies geschieht.

Es muss in diesem Zusammenhang noch erwähnt werden, dass die Ladeschaltung 505 einen Stromfluss nur zum Langzeit-Energiespeicher 108 hin, keinesfalls aber in umgekehrter Richtung weg vom Energiespeicher 108 zulassen darf. Im einfachsten Fall gelingt dies durch Verwendung einer Diode.

Fig. 6 zeigt ein Blockschaltbild gemäß einem weiteren Ausführungsbeispiel der Erfindung. Im Unterschied zum Blockschaltbild der Fig. 5 wird der Langzeit-Energiespeicher 108 durch die Ladeschaltung 505 auf eine geeignete Spannung (beispielsweise 4 V) aufgeladen. Der normale Speicherkondensator 501 wird auf höheren Spannungen entsprechend der Versorgungsspannung an den Anschlüssen 118, 119 bzw. der Ausgangsspannung der Sensor-Loop-Schnittstelle 101 betrieben (beispielsweise ≥ 8 V). Anstatt der Schalteinheit 504 zwischen Langzeit-Energiespeicher 108 und erstem Pufferkondensator 501 kann auch eine Diode 602 vorgesehen sein, welche einen Stromfluss zwischen Langzeit-Energiespeicher 108 und erstem Pufferkondensator 501 erlaubt, den entgegengesetzten Stromfluss jedoch unterbindet.

Durch die Stützung des ersten Pufferkondensators 501 über den Langzeit-Energiespeicher 108 dauert es nach dem Einschalten des Füllstandmessgeräts nicht so lange, bis dieser so weit geladen ist, dass die erste Messung erfolgen kann. Um diese Zeit noch weiter zu verkürzen, wird in der Zeit bis zur ersten Messwerterfassung ein "herkömmlicher" Pufferkondensator 501 mit verhältnismäßig geringer Kapazität verwendet. Später wird zur Verbesserung der Energieeffizienz dem Pufferkondensator 501 ein weiterer Kondensator 601 parallel geschaltet, der zuvor langsam aufgeladen wurde. Typischer Weise beträgt die Kapazität des Langzeit-Energiespeichers 108 einige Millifarad bis zu einigen Farad, während die Kapazität des Pufferkondensators 501 im Bereich von einigen 100 Mikrofarad liegt. Die Kapazität des weiteren Kondensators 601 ist typischerweise mindestens genau so groß wie die des Kondensators 501, bevorzugt etwa zwei- bis dreimal größer als diese.

Wird das Füllstandmessgerät angeschaltet, wird somit zunächst der erste Pufferkondensator 501 geladen. Hierbei hilft der Langzeit-Energiespeicher 108 sowie die Energie aus der Zweidrahtleitung. Somit kann die erste Messung relativ kurz nach dem Einschalten des Feldgeräts erfolgen.

Gleichzeitig wird der zweite Pufferkondensator 601 mit einer durch den zwischen den beiden Kondensatoren 501, 601 geschalteten Widerstand 604 verzögerten Rate geladen. Nach erfolgter Ladung des weiteren Pufferkondensators 601 kann der Schalter 603, gesteuert beispielsweise durch die Auswerteelektronik 112, geschlossen werden, der sich zwischen den beiden Pufferkondensatoren 501, 601 befindet (parallel zum Ladewiderstand 604), sodass beide Kondensatoren 501, 601 nun zusammen Energie an die Sensorelektronik 111 abgeben können.

Der Ladevorgang des zweiten Pufferkondensators 601 kann einige Minuten dauern. Werden beide Kondensatoren parallel betrieben, werden sie bei einer Messung durch die Sensorelektronik 111 jeweils nicht so stark entladen, als wenn nur ein einzelner Pufferkondensator vorgesehen wäre, sodass ein energetisch günstigerer Ladevorgang beider Kondensatoren erfolgen kann. Hierdurch kann Energie gespart werden.

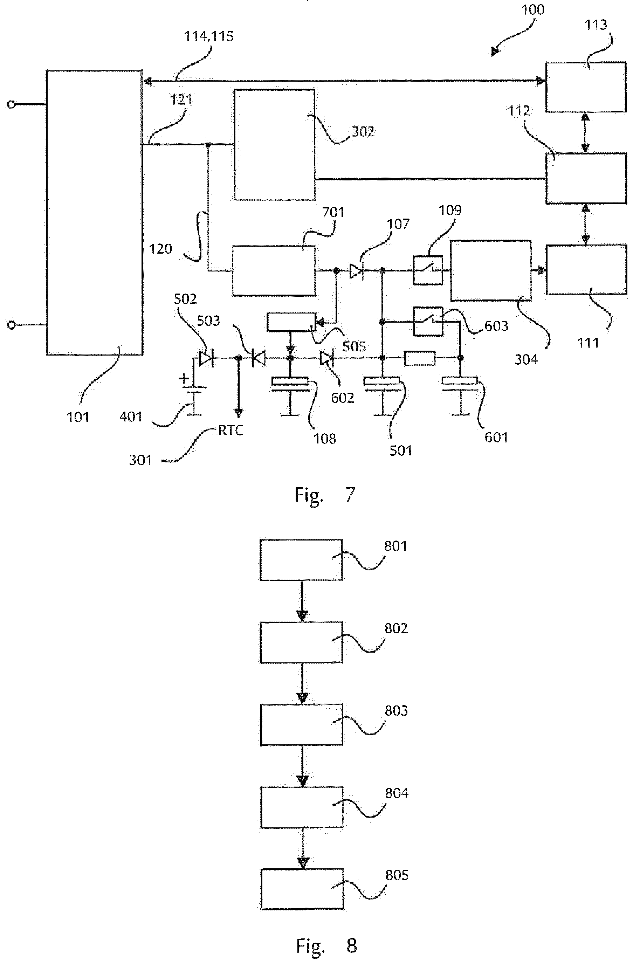

Fig. 7 zeigt ein Blockschaltbild gemäß einem weiteren Ausführungsbeispiel der Erfindung. Im Unterschied zum Blockschaltbild der Fig. 6 weist das Füllstandmessgerät 100 eine Strombegrenzungsschaltung 701 auf, die dafür sorgt, dass die Leistungsversorgung 302 für die Messelektronik 112 und die Kommunikationsschaltung 113 vorrangig bedient wird. Damit werden beim Einschalten des Füllstandmessgeräts diese beiden Schaltungsblöcke 112, 113 sehr schnell mit Energie versorgt und können booten.

Der Speicherkondensator 108 und auch die Pufferkondensatoren 501, 601 erhalten durch die Strombegrenzungsschaltung 701 nur so viel Ladung, wie von den vorrangig versorgten Schaltungsteilen 112, 113 noch übrig ist, sodass deren ordnungsgemäßer Betrieb garantiert werden kann. Durch den Langzeit-Energiespeicher 108 ist diese Verknappung der Energie für den Pufferkondensator 501 weniger nachteilig. Damit ist sichergestellt, dass sowohl die Messelektronik 112 schnell bootet als auch im Pufferkondensator 501 schnell ausreichend Pufferladung zur Durchführung einer Messung vorhanden ist.

Die Strombegrenzung 701 befindet sich stromaufwärts zu der Kondensatoranordnung 108, 501, 601 in der Abzweigung 120, die direkt von der Versorgungsleitung 121 vor der Leistungsversorgungseinheit 302 für die Kommunikationsschaltung 113 und Messelektronik 112 abzweigt.

Fig. 8 zeigt ein Flussdiagramm eines Verfahrens gemäß einem Ausführungsbeispiel der Erfindung. Zunächst erfolgt ein Anschalten 801 des Füllstandmessgeräts, gefolgt von einem Schließen 802 einer Schalteinheit 109, welche zwischen einem Langzeit-Energiespeicher 108 und einer Sensorelektronik 111 des Füllstandmessgeräts angeordnet ist, um einen Stromfluss vom Langzeit-Energiespeicher in Richtung der Sensorelektronik zu ermöglichen.

Danach erfolgt ein Laden 803 des Langzeit-Energiespeichers über eine externe Energieversorgung, welche auch die Sensorelektronik 111, die Messelektronik 112 und die Kommunikationsschaltung 113 des Füllstandmessgeräts mit Energie versorgt.

Das Versorgen der Kommunikationsschaltung 113 und der Messelektronik 112 mit ausreichend Energie aus der externen Energieversorgung erfolgt direkt nach dem Anschalten des Füllstandmessgeräts, um einen Bootvorgang des Geräts durchzuführen. Das Laden eines Pufferkondensators 501 erfolgt mit der überschüssigen Energie aus der externen Energieversorgung und gleichzeitiges Laden des Pufferkondensators über den Langzeit-Energiespeicher 108.

Nach oder noch während des Ladevorgangs des ersten Pufferkondensators 501 kann ein Durchführen erster Messungen 804 durch die Sensorelektronik 111 mit energetischer Unterstützung durch den ersten Pufferkondensator 501 erfolgen. Gleichzeitig kann ein Laden eines zweiten Pufferkondensators 601 mit überschüssiger Energie aus der externen Energiequelle erfolgen, gefolgt von einem Durchführen zweiter Messungen 805 durch die Sensorelektronik 111 mit der Unterstützung beider Pufferkondensatoren 501, 601.

Es sei darauf hingewiesen, dass die genannten Schalteinheiten 109, 402, 504, 603 bevorzugt elektronische Schalteinheiten, beispielsweise in Form von Transistoren oder Analogschaltern, sind. Die Schaltsignale zur Aktivierung oder Deaktivierung der elektronischen Schalteinheiten werden in bevorzugter Weise innerhalb der Schaltung des Messgeräts 100 generiert. Beispielsweise kann eine in der Messelektronik 112 angeordnete digitale Steuereinheit (CPU, central processing unit) entsprechende Schaltsignale ausgeben. Ebenso sind bestimmte Spannungen innerhalb des Messgeräts als Schaltsignal geeignet. Die Schalteinheit 109 beispielsweise lässt sich bevorzugt aktivieren durch eine von der Spannung am Anschluss 118 abgeleitete Spannung.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandmessgerät, aufweisend:
einen Anschluss (118, 119) für eine externe Energieversorgung;
eine Sensorelektronik (111) zum Erfassen eines elektrischen Sensorsignals, aus dem sich ein Füllstand ableiten lässt;
einen Langzeit-Energiespeicher (108), der über die externe Energieversorgung aufladbar ist und ausgeführt ist als Energiequelle zum Laden eines Pufferkondensators (501) oder zum direkten Ausgleich eines schwankenden Energieverbrauchs des Füllstandmessgeräts;
ein erstes Bauteil (107), das mit dem Langzeit-Energiespeicher verbunden ist und zum Verhindern eines Stromflusses vom Langzeit-Energiespeicher in Richtung des Anschlusses eingerichtet ist;
ein zweites Bauteil (109), das mit dem Langzeit-Energiespeicher verbunden ist und zum Verhindern eines Stromflusses vom Langzeit-Energiespeicher in Richtung der Sensorelektronik eingerichtet ist, wenn das Füllstandmessgerät nicht von der externen Energieversorgung mit Energie versorgt wird.

2. Füllstandmessgerät nach Anspruch 1,
wobei es sich bei dem ersten Bauteil (107) um eine Diode oder eine Schalteinheit handelt.

3. Füllstandmessgerät nach Anspruch 1 oder 2,
wobei es sich bei dem zweiten Bauteil (109) um eine Schalteinheit handelt.

4. Füllstandmessgerät nach einem der vorhergehenden Ansprüche,
wobei es sich bei der externen Energieversorgung um eine Zweileiterschleife handelt, über welche das Füllstandmessgerät mit Energie für den Messbetrieb versorgbar ist und über welche der Messwert kommunizierbar ist.

5. Füllstandmessgerät nach Anspruch 4, wobei es sich bei der Zweileiterschleife um eine 4-20mA-Zweileiterschleife handelt.

6. Füllstandmessgerät nach einem der vorhergehenden Ansprüche,
wobei der Langzeit-Energiespeicher (108) zur Energieversorgung eines Elements des Füllstandmessgeräts ausgeführt ist, wenn das Füllstandmessgerät ausgeschaltet ist.

7. Füllstandmessgerät nach einem der vorhergehenden Ansprüche, weiterhin aufweisend:
eine Batterie (401) und eine Schalteinheit (402), welche die Batterie mit dem Langzeit-Energiespeicher (108) verbindet;
wobei die Batterie und die Schalteinheit ausgeführt sind, den Langzeit-Energiespeicher nur dann mit Energie zu versorgen, wenn das Füllstandmessgerät ausgeschaltet ist.

8. Füllstandmessgerät nach einem der vorhergehenden Ansprüche, weiterhin aufweisend:
einen Pufferkondensator (501) zum Ausgleich des schwankenden Energieverbrauchs des Füllstandmessgeräts;
eine Schalteinheit (504), welche den Langzeit-Energiespeicher (108) mit dem Pufferkondensator verbindet und derart ausgeführt ist, dass der Langzeit-Energiespeicher den Pufferkondensator lädt, nachdem das Füllstandmessgerät eingeschaltet wird.

9. Füllstandmessgerät nach einem der Ansprüche 1 bis 7, weiterhin aufweisend:
einen ersten Pufferkondensator (501) zum Ausgleich des schwankenden Energieverbrauchs des Füllstandmessgeräts;
einen zweiten Pufferkondensator (601), der parallel zu dem ersten Pufferkondensator geschaltet ist und im Gegensatz zum ersten Pufferkondensator über einen Wiederstand (604) mit dem Anschluss (118, 119) verbunden ist, so dass der Ladevorgang des zweiten Pufferkondensators verzögert ist.

10. Füllstandmessgerät nach einem der vorhergehenden Ansprüche, weiterhin aufweisend:
eine Kommunikationsschaltung (111);
eine Messelektronik (112);
eine Strombegrenzungsschaltung (701), die ausgeführt ist, dem Langzeit-Energiespeicher (108) nur die Energie aus der externen Energieversorgung bereitzustellen, die nicht für die Kommunikationsschaltung (111) und die Messelektronik (112) benötigt wird.

11. Verfahren zum Betreiben eines Füllstandmessgeräts und zur Durchführung erster Messungen nach dem Anschalten, aufweisend die Schritte:
Anschalten des Füllstandmessgeräts, wobei das Füllstandmessgerät einen Anschluss (118, 119) für eine externe Energieversorgung aufweist;
Schließen einer Schalteinheit (109), welche zwischen einem Langzeit-Energiespeicher (108) und einer Sensorelektronik (111) des Füllstandmessgeräts angeordnet ist, um einen Stromfluss vom Langzeit-Energiespeicher in Richtung der Sensorelektronik zu ermöglichen;
Laden des Langzeit-Energiespeichers über eine externe Energieversorgung, welche auch die Sensorelektronik (111), die Messelektronik (112) und die Kommunikationsschaltung (113) des Füllstandmessgeräts mit Energie versorgt;
Laden eines Pufferkondensators (501) oder direkter Ausgleich eines schwankenden Energieverbrauchs des Füllstandmessgeräts durch den Langzeit-Energiespeicher;
Verbinden eines ersten Bauteils (107) mit dem Langzeit-Energiespeicher, um einen Stromfluss vom Langzeit-Energiespeicher in Richtung des Anschlusses zu verhindern;
Verbinden eines zweiten Bauteils (109), bei welchem es sich um die Schalteinheit handelt, mit dem Langzeit-Energiespeicher, um einen Stromfluss vom Langzeit-Energiespeicher in Richtung der Sensorelektronik zu verhindern, wenn das Füllstandmessgerät nicht von der externen Energieversorgung mit Energie versorgt wird.

12. Verfahren nach Anspruch 11, weiterhin aufweisend die Schritte:
Versorgen der Kommunikationsschaltung (113) und der Messelektronik (112) mit ausreichend Energie aus der externen Energieversorgung direkt nach dem Anschalten des Füllstandmessgeräts, um einen Bootvorgang durchzuführen;
Laden des Pufferkondensators (501) mit überschüssiger Energie aus der externen Energieversorgung;
gleichzeitiges Laden des Pufferkondensators über den Langzeit-Energiespeicher (108);
gleichzeitiges Laden eines zweiten Pufferkondensators (601) mit überschüssiger Energie aus der externen Energiequelle;
Durchführen erster Messungen durch die Sensorelektronik (111) mit energetischer Unterstützung durch den ersten Pufferkondensator, bevor der zweite Pufferkondensator geladen ist;
Durchführen zweiter Messungen durch die Sensorelektronik (111) mit der Unterstützung beider Pufferkondensatoren (501, 601).

## Claims

1. Fill level measurement device comprising:
a connection (118, 119) for an external energy supply;
a sensor electronics (111) for detecting an electrical sensor signal, from which a fill level can be deduced;
a long-term energy store (108) which is configured to be charged by means of the external energy supply and is designed as a source of energy for charging a buffer capacitor (501) or for directly compensating for a fluctuating energy consumption of the fill level measurement device;
a first component (107) which is connected to the long-term energy store and is configured to prevent current from flowing from the long-term energy store towards the connection;
a second component (109) which is connected to the long-term energy store and is configured to prevent current from flowing from the long-term energy store towards the sensor electronics when the fill level measurement device is not supplied with energy by the external energy supply.

2. Fill level measurement device according to claim 1,
wherein the first component (107) is a diode or a switching unit.

3. Fill level measurement device according to claim 1 or 2,
wherein the second component (109) is a switching unit.

4. Fill level measurement device according to any of the preceding claims,
wherein the external energy supply is a two-wire loop, by means of which the fill level measurement device can be supplied with energy for the measurement operation and by means of which the measured value can be communicated.

5. Fill level measurement device according to claim 4,
wherein the two-wire loop is a 4-20 mA two-wire loop.

6. Fill level measurement device according to any of the preceding claims,
wherein the long-term energy store (108) is designed to supply energy to an element of the fill level measurement device when the fill level measurement device is switched off.

7. Fill level measurement device according to any of the preceding claims, further comprising:
a battery (401) and a switching unit (402) which connects the battery to the long-term energy store (108);
wherein the battery and the switching unit are designed to supply the long-term energy store with energy only when the fill level measurement device is switched off.

8. Fill level measurement device according to any of the preceding claims, further comprising:
a buffer capacitor (501) for compensating for the fluctuating energy consumption of the fill level measurement device;
a switching unit (504) which connects the long-term energy store (108) to the buffer capacitor and is designed such that the long-term energy store charges the buffer capacitor after the fill level measurement device is switched on.

9. Fill level measurement device according to any of claims 1 to 7, further comprising:
a first buffer capacitor (501) for compensating for the fluctuating energy consumption of the fill level measurement device;
a second buffer capacitor (601), which is connected in parallel with the first buffer capacitor and is connected, unlike the first buffer capacitor, to the connection (118, 119) via a resistor (604) so as to delay the process of charging the second buffer capacitor.

10. Fill level measurement device according to any of the preceding claims, further comprising:
a communication circuit (111);
a measurement electronics (112);
a current-limiting circuit (701) designed to supply the long-term energy store (108) only with the energy from the external energy supply that is not required by the communication circuit (111) and the measurement electronics (112).

11. Method for operating a fill level measurement device and for carrying out first measurements after switching on, comprising the steps of:
switching on the fill level measurement device, wherein the fill level measurement device comprises a connection (118, 119) for an external energy supply;
closing a switching unit (109), which is arranged between a long-term energy store (108) and the sensor electronics (111) of the fill level measurement device, in order to allow current to flow from the long-term energy store towards the sensor electronics;
charging the long-term energy store by means of an external energy supply which also supplies energy to the sensor electronics (111), the measurement electronics (112) and the communication circuit (113) of the fill level measurement device;
charging a buffer capacitor (501) or directly compensating for the fluctuating energy consumption of the fill level measurement device by means of the long-term energy store;
connecting a first component (107) to the long-term energy store, in order to prevent current from flowing from the long-term energy store towards the connection;
connecting a second component (109), which is a switching unit, to the long-term energy store, in order to prevent current from flowing from the long-term energy store towards the sensor electronics when the fill level measurement device is not supplied with energy by the external energy supply.

12. Method according to claim 11, further comprising the steps of:
supplying the communication circuit (113) and the measurement electronics (112) with sufficient energy from the external energy supply directly after the fill level measurement device has been switched on, in order to carry out a boot process;
charging a buffer capacitor (501) with surplus energy from the external energy supply;
simultaneously charging the buffer capacitor by means of the long-term energy store (108);
simultaneously charging a second buffer capacitor (601) with surplus energy from the external energy source;
carrying out first measurements by means of the sensor electronics (111) with energetic support from the first buffer capacitor, before the second buffer capacitor is charged; and
carrying out second measurements by means of the sensor electronics (111) with the support of both buffer capacitors (501, 601).

## Revendications

1. Appareil de mesure de niveau de remplissage de fluide, comportant :
une connexion (118, 119) pour une alimentation externe en énergie ;
une électronique de capteur (111) destinée à acquérir un signal électrique de capteur, duquel un niveau de remplissage de fluide peut être dérivé ;
un accumulateur d'énergie à stockage de longue durée (108), qui peut être chargé par le biais de l'alimentation externe en énergie et qui est conçu comme source d'énergie pour le chargement d'un condensateur tampon (501) ou pour la compensation directe d'une consommation d'énergie variable de l'appareil de mesure de niveau de remplissage de fluide ;
un premier composant (107), qui est raccordé à l'accumulateur d'énergie à stockage de longue durée et qui est configuré pour empêcher un flux de courant depuis l'accumulateur d'énergie à stockage de longue durée en direction de la connexion ;
un second composant (109), qui est raccordé à l'accumulateur d'énergie à stockage de longue durée et qui est configuré pour empêcher un flux de courant depuis l'accumulateur d'énergie à stockage de longue durée en direction de l'électronique de capteur quand l'appareil de mesure de niveau de remplissage de fluide n'est pas alimenté en énergie par l'alimentation externe en énergie.

2. Appareil de mesure de niveau de remplissage de fluide selon la revendication 1,
dans lequel le premier composant (107) est une diode ou une unité de commutation.

3. Appareil de mesure de niveau de remplissage de fluide selon la revendication 1 ou 2,
dans lequel le second composant (109) est une unité de commutation.

4. Appareil de mesure de niveau de remplissage de fluide selon l'une des revendications précédentes,
dans lequel l'alimentation externe en énergie est une boucle à deux fils, par le biais de laquelle l'appareil de mesure de niveau de remplissage de fluide peut être alimenté en énergie pour le mode de mesure et par le biais de laquelle la valeur de mesure peut être communiquée.

5. Appareil de mesure de niveau de remplissage de fluide selon la revendication 4, dans lequel la boucle à deux fils est une boucle à deux fils 4-20 mA.

6. Appareil de mesure de niveau de remplissage de fluide selon l'une des revendications précédentes,
dans lequel l'accumulateur d'énergie à stockage de longue durée (108) est conçu pour alimenter en énergie un élément de l'appareil de mesure de niveau de remplissage de fluide quand l'appareil de mesure de niveau de remplissage de fluide est éteint.

7. Appareil de mesure de niveau de remplissage de fluide selon l'une des revendications précédentes, comportant en outre :
une pile (401) et une unité de commutation (402), qui raccorde la pile à l'accumulateur d'énergie à stockage de longue durée (108) ;
dans lequel la pile et l'unité de commutation sont conçues pour alimenter l'accumulateur d'énergie à stockage de longue durée uniquement quand l'appareil de mesure de niveau de remplissage de fluide est éteint.

8. Appareil de mesure de niveau de remplissage de fluide selon l'une des revendications précédentes, comportant en outre :
un condensateur tampon (501) pour compenser la consommation d'énergie variable de l'appareil de mesure de remplissage de niveau de remplissage de fluide ;
une unité de commutation (504), qui raccorde l'accumulateur d'énergie à stockage de longue durée (108) au condensateur tampon et qui est conçue de telle manière que l'accumulateur d'énergie à stockage de longue durée charge le condensateur tampon après que l'appareil de mesure de niveau de remplissage de fluide a été mis en marche.

9. Appareil de mesure de niveau de remplissage de fluide selon l'une des revendications 1 à 7, comportant en outre :
un premier condensateur tampon (501) pour compenser la consommation d'énergie variable de l'appareil de mesure de niveau de remplissage de fluide ;
un second condensateur tampon (601), qui est branché en parallèle avec le premier condensateur tampon et est, contrairement au premier condensateur tampon, raccordé à la connexion (118, 119) par le biais d'une résistance (604) de telle sorte que le processus de charge du second condensateur tampon est retardé.

10. Appareil de mesure de remplissage de niveau de remplissage de fluide selon l'une des revendications précédentes, comportant en outre :
un circuit de communication (111) ;
une électronique de mesure (112) ;
un circuit de limitation de courant (701), qui est conçu pour fournir à l'accumulateur d'énergie à stockage de longue durée (108) uniquement l'énergie de l'alimentation externe en énergie qui n'est pas nécessaire pour le circuit de communication (111) et l'électronique de mesure (112).

11. Procédé de fonctionnement d'un appareil de mesure de niveau de remplissage de fluide et d'exécution de premières mesures après la mise en marche, comportant les étapes de :
mise en marche de l'appareil de mesure de remplissage de niveau de remplissage de fluide, l'appareil de mesure de niveau de remplissage de fluide comportant une connexion (118, 119) pour une alimentation externe en énergie ;
fermeture d'une unité de commutation (109), qui est disposée entre un accumulateur d'énergie à stockage de longue durée (108) et une électronique de capteur (111) de l'appareil de mesure de niveau de remplissage de fluide pour permettre un flux de courant depuis l'accumulateur d'énergie à stockage de longue durée en direction de l'électronique de capteur ;
chargement de l'accumulateur d'énergie à stockage de longue durée par le biais d'une alimentation externe en énergie, qui alimente également l'électronique de capteur (111), l'électronique de mesure (112) et le circuit de communication (113) de l'appareil de mesure de niveau de remplissage de fluide ;
chargement d'un condensateur tampon (501) ou compensation directe d'une consommation d'énergie variable de l'appareil de mesure de remplissage de niveau de remplissage de fluide par l'accumulateur d'énergie à stockage de longue durée ;
raccordement d'un premier composant (107) à l'accumulateur d'énergie à stockage de longue durée, pour empêcher un flux de courant depuis l'accumulateur d'énergie à stockage de longue durée en direction de la connexion ;
raccordement d'un second composant (109), qui est l'unité de commutation, à l'accumulateur d'énergie à stockage de longue durée, pour empêcher un flux de courant depuis l'accumulateur d'énergie à stockage de longue durée en direction de l'électronique de capteur quand l'appareil de mesure de niveau de remplissage de fluide n'est pas alimenté en énergie par l'alimentation externe en énergie.

12. Procédé selon la revendication 11, comportant en outre les étapes de :
alimentation du circuit de commutation (113) et de l'électronique de mesure (112) avec suffisamment d'énergie provenant de l'alimentation externe en énergie directement après la mise en marche de l'appareil de mesure de niveau de remplissage de fluide pour exécuter un processus de démarrage ;
chargement du condensateur tampon (501) avec de l'énergie excédentaire de l'alimentation externe en énergie ;
chargement simultané du condensateur tampon par le biais de l'accumulateur d'énergie à stockage de longue durée (108) ;
chargement simultané d'un second condensateur tampon (601) avec de l'énergie excédentaire de la source d'énergie externe ;
exécution de premières mesures par l'électronique de capteur (111) avec assistance énergétique par le premier condensateur tampon avant que le second condensateur tampon ne soit chargé ;
exécution de secondes mesures par l'électronique de capteur (111) avec l'assistance énergétique des deux condensateurs tampons (501, 601).
